# EUROPÄISCHE PATENTSCHRIFT

(11) **EP 3 221 084 B1**
(45) Veröffentlichungstag und Bekanntmachung des Hinweises auf die Patenterteilung: **01.05.2019**
(21) Anmeldenummer: 15831044.1
(22) Anmeldetag: 10.11.2015
(51) Int. Cl.: B23Q 16/04, H05K 13/00, B23Q 1/58

(54) **VORRICHTUNG ZUM TRANSPORT VON GEGENSTÄNDEN**
DEVICE FOR TRANSPORTING OBJECTS
DISPOSITIF DE TRANSPORT D'OBJETS

(30) Priorität: 19.11.2014 DE 102014116923
(43) Veröffentlichungstag der Anmeldung: 27.09.2017
(73) Patentinhaber: HARTING Electronics GmbH, 32339 Espelkamp (DE)
(72) Erfinder: WÄRMKER, Karl, 32361 Preußisch Oldendorf (DE)
(86) Internationale Anmeldenummer: PCT/DE2015/100480
(87) Internationale Veröffentlichungsnummer: WO 2016/078645

(56) Entgegenhaltungen:
- US-A- 3 723 928
- US-A- 6 016 715

## Beschreibung

Die Erfindung betrifft eine Vorrichtung zum Transport von Gegenständen. Derartige Transportvorrichtungen werden benötigt, um zu bearbeitende Gegenstände wie Werkstücke, Leiterplatten oder andere Halbzeuge im Produktionsablauf auf Bearbeitungsmaschinen bewegen zu können. Dabei müssen die Werkstücke je nach Bearbeitungsschritt in den Maschinen bewegt werden um verschiedene Bearbeitungsvorgänge an unterschiedlichen Punkten der Werkstücke vornehmen zu können.

Bei den Bearbeitungsmaschinen kann es sich dabei um Bohrmaschinen, Fräsmaschinen, Lötmaschinen, Pressen, Stanzen oder andere Bearbeitungsmaschinen handeln. Sofern die Bearbeitungsmaschine über keine umfangreichen Möglichkeiten für Einstellungen verfügt, müssen Werkstücke ggf. für verschiedene Bearbeitungsschritte mehrfach bewegt, ausgerichtet und fixiert werden.

Zu bearbeitende Werkstücke können dabei ein hohes Gewicht aufweisen, was eine Bewegung dieser auf einer Maschine erschwert. Gerade bei Bearbeitungsmaschinen, die nicht viel Platz im Bearbeitungsraum aufweisen, ist das Bewegen und Fixieren schwerer Werkstücke kompliziert.

Zudem müssen bei einer Serienfertigung eine Vielzahl gleicher Werkstücke in mehreren, definierten Positionen auf einer Maschine bearbeitet werden. Um die verschiedenen Positionen nicht für jedes Werkstück einzeln suchen oder messen zu müssen, wird sich verschiedener, einfacher Tricks bedient.

So werden zum Beispiel die Positionen mit einem Marker oder Stift auf der Maschine markiert. Bei mehreren, unterschiedlichen Werkstücken, die auf derselben Maschine bearbeitet werden, werden die Markierungen sehr unübersichtlich und das Markierungssystem sehr fehleranfällig. Zudem ist es mit schweren Werkstücken schwierig die Markierungen und somit die richtigen Positionen korrekt zu treffen.

Eine Vorrichtung zum Fixierung und Transport von Gegenständen, bestehend aus einer ersten, flächig ausgebildeten Struktur und einer zweiten, flächig ausgebildeten Struktur, wobei die erste Struktur eine, der zweiten Struktur zugewandte, ebene Lauffläche ausbildet, wobei die zweite Struktur eine, der ersten Struktur zugewandte, ebene Kontaktfläche ausbildet, wobei die Lauffläche und die Kontaktfläche parallel zueinander angeordnet sind, wobei die zweite Struktur über zumindest eine Kugelrolle verfügt, die mit der Lauffläche der ersten Struktur in Kontakt steht, und wobei die erste Struktur und die zweite Struktur parallel zueinander verschiebbar sind, ist aus der US 3,723,928 bekannt.

### Aufgabenstellung

Die Aufgabe der Erfindung besteht darin eine Vorrichtung vorzustellen, die das Bewegen von Gegenständen erleichtert. Hierbei sollen vor allem schwere Gegenstände auch von Hand gut bewegt werden können. Des Weiteren soll die Erfindung ein einfaches, wiederholtes Ausrichten und Justieren von Gegenständen an exakt definierten Positionen ermöglichen.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

Bei der Erfindung handelt es sich um eine Vorrichtung zum Transport von Gegenständen, wobei die Vorrichtung aus zwei flächig ausgebildeten Strukturen besteht. Die flächig ausgebildeten Strukturen sind parallel zueinander angeordnet. Dabei weist die erste Struktur mit einer Lauffläche zur zweiten Struktur. Die zweite Struktur wiederum weist mit einer Kontaktfläche zur ersten Struktur. Die Lauffläche und die Kontaktfläche liegen sich parallel gegenüber und bilden einen Spalt.

An der zweiten Struktur ist zumindest eine Kugelrolle vorgesehen, welche sich in Richtung der ersten Struktur durch die Kontaktfläche erstreckt. Die Kugelrolle berührt die Lauffläche der ersten Struktur, wodurch der Spalt zwischen der Lauffläche und der Kontaktfläche definiert wird.

Durch die zumindest eine Kugelrolle ist ein Verschieben der beiden Strukturen gegeneinander einfach möglich. Ein Gegenstand, der auf der oberen Struktur abgelegt oder befestigt ist, kann so einfach durch Verschieben der oberen Struktur auf der unteren Struktur bewegt werden. So kann ein Gegenstand von einer Position zu einer zweiten Position transportiert werden, ohne große Reibungskräfte die zwischen den Strukturen erzeugt werden.

Vorzugsweise verfügt die zweite Struktur über zwei oder mehr Kugelrollen. Dadurch wird ein Kippen der Strukturen zueinander vermieden. Die Strukturen können auf den Kugelrollen gegeneinander verschoben werden und der Spalt zwischen den Strukturen bleibt gleich.

In einer bevorzugten Ausführungsform ist die zumindest eine Kugelrolle über eine Regulierungsvorrichtung mit der zweiten Struktur verbunden. Durch die Regulierungsvorrichtung kann der Sitz der Kugelrolle in der zweiten Struktur eingestellt werden. Die Durchdringung der Kugelrolle durch die Kontaktfläche der zweiten Struktur kann reguliert werden. Das Maß, dass die Kugelrolle durch die Kontaktfläche ragt ist so einstellbar.

Vorzugsweise ist die Kugelrolle in einer Aufnahme kugelgelagert eingefasst. Die Aufnahme ist mit einem Gewindebolzen versehen und an der zweiten Struktur verschraubt. Mittels einer entsprechenden Aufnahme und Muttern, die zusammen die Regulierungsvorrichtung bilden, kann die Durchtauchtiefe der Kugelrolle, durch die Kontaktfläche so reguliert werden.

Die Erfindung ist ferner dadurch gekennzeichnet, dass in der Lauffläche der ersten Struktur zumindest eine Öffnung vorgesehen ist. Die Öffnung ist dabei so ausgelegt, dass die Kugelrolle soweit in die Öffnung eintauchen kann, bis die Lauffläche und die Kontaktfläche sich berühren. Bei der Öffnung kann es sich sowohl um ein Sackloch, als auch um einen vollständigen Durchbruch durch die gesamte Struktur handeln. Dabei kann die Öffnung rund, dreieckig, viereckig oder vieleckig ausgebildet sein.

Vorzugsweise sind mindestens genauso viele Öffnungen in der Lauffläche vorgesehen, wie Kugelrollen in der zweiten Struktur. Durch eine identische Anordnung von Öffnungen und Kugelrollen ist ein gleichzeitiges Eintauchen der Kugelrollen in die jeweils vorgesehene Öffnung möglich. Die Lauffläche und Kontaktfläche können sich so vollständig berühren.

Durch das Eintauchen der Kugelrollen in die Öffnungen wird gleichzeitig die Position der beiden Strukturen zueinander und die Position eines Gegenstandes, der sich auf einer der Strukturen befindet, definiert. Durch die Anordnung mehrere Öffnungen je Kugelrolle können so mehrere Positionen definiert werden.

Durch Verschieben der beiden Strukturen zueinander, können unterschiedliche Positionen eingenommen werden. Bei Erreichen einer definierten Position tauchen die Kugelrollen in die jeweiligen Öffnungen ein. Die beiden Strukturen nähern sich an, bis die Lauffläche und die Kontaktfläche in flächigem Kontakt stehen.

Zum erneuten Bewegen der beiden Strukturen gegeneinander, muss eine der Strukturen verschoben werden, damit die Kugelrollen aus den Öffnungen herausgehoben werden. Dann können die Strukturen wieder gegeneinander, in eine weitere Position gebracht werden.

Zum Herausheben der Kugelrollen aus den Öffnungen dient der Kreisbogen der Kugelrolle als schiefe Ebene und Drehpunkt. Je weiter die Kugelrollen durch die Kontaktfläche ragt und in den Öffnungen aufgenommen sind, desto schwieriger gleiten diese beim Verschieben der Strukturen gegeneinander aus den Öffnungen heraus. Je flacher die Kugelrollen in die Öffnungen eindringen, desto einfach gleiten diese auch wieder beim Verschieben heraus.

Als vorteilhaft für die Durchdringung der Kontaktfläche und das Eindringen in die Öffnungen hat sich ein Maß, kleiner als das 0,3-fache des Kugelrollenradius herausgestellt. Besonders vorteilhaft ist ein Maß von 0,16-mal dem Kugelrollenradius oder geringfügig weniger.

Um die definierten Positionen zwischen den beiden Strukturen besser finden zu können, verfügt die Vorrichtung in einer speziellen Ausführungsform über eine Führung. Die Führung ermöglicht es, die Strukturen von einer definierten Position direkt zur nächsten definierten Position zu verschieben. Ein Suchen der exakten Position ist nicht nötig.

Die Führung besteht dazu aus einer Führungsnut, sowie einem Führungsstift. Dabei ist die Führungsnut an einer der Strukturen vorgesehen, wobei der Führungsstift an der anderen der Strukturen angebracht ist. Vorzugsweise sind die Führungsnut und der Führungsstift auf der Lauffläche bzw. der Kontaktfläche angeordnet.

Der Führungsstift greift in die Führungsnut ein und führt so die beiden Strukturen zueinander. Die Führungsnut ist so an der einen Struktur vorgesehen, dass die beiden Strukturen von einer definierten Position, zu einer nächsten definierten Position geführt werden. Vorzugsweise werden so die Kugelrollen von einer Öffnung zu einer nächsten Öffnung geführt.

In einer besonderen Ausführungsform ist die Führungsnut in der Lauffläche der ersten Struktur eingebracht und verbindet direkt zwei Öffnungen der ersten Struktur miteinander. Die Aufgabe des Führungsstifts wird in dieser speziellen Ausführungsform durch die Kugelrolle übernommen. Diese kann aus einer Öffnung gehoben werden und direkt in der Führungsnut zur nächsten Öffnung rollen. Die Kugelrolle und somit die gesamte zweite Struktur wird so durch die Führungsnut zwischen zwei Öffnungen geführt.

Zum Transport von Gegenständen ist die Vorrichtung so anzuwenden, dass eine der Strukturen als Basis in beispielsweise einer Maschine fixiert wird. Dies kann durch beliebige Hilfsmittel wie zum Beispiel Schrauben oder auch Verschweißen realisiert werden. Die zweite Struktur dient oberhalb als Transportstruktur für Gegenstände. Dabei kann sowohl die erste Struktur als auch die zweite Struktur als Basis, wie auch als Transportstruktur dienen. Die gesamte Vorrichtung ist somit auch um 180° gedreht denkbar.

Auf der oberen Transportstruktur ist zweckmäßig ein Mittel vorgesehen, welches zur Aufnahme des zu transportierenden Gegenstands dient. Dabei kann es sich bei dem Mittel um eine universale Halterung handeln oder um eine spezielle Konstruktion für nur ein bestimmtes Bauteil. Dies kann vor allem bei der Aufnahme von beispielsweise Leiterkarten sinnvoll sein. Hier kann ein Mittel zur Aufnahme vorgesehen sein, welches eine spezielle Art von Leiterkarte aufnehmen kann.

In einer besonders vorteilhaften Ausführungsform sind die erste Struktur und die zweite Struktur jeweils eine Metallplatte. Diese weisen eine hohe Festigkeit auf, um auch schwere Gegenstände transportieren zu können. Zudem können die Lauffläche und die Kontaktfläche als Metallplatten sehr eben ausgeführt werden, wodurch ein exakt paralleles Aufeinanderliegen der beiden Flächen möglich ist.

Dies kann besonders bei der Verwendung der Vorrichtung unter einer Presse von Vorteil sein. Durch das plane Aufeinanderliegen der Lauffläche und der Kontaktfläche ist ein Verrutschen der Strukturen zueinander nicht möglich und gleichzeitig eine große, flächige Kraftübertragung von der oberen Struktur zur unteren Struktur möglich.

Mit der Vorrichtung nach dieser Erfindung ist es vorteilhaft möglich, Gegenstände auf einem beengten Raum, wie zum Beispiel unter einer Presse einfach, ohne großen Kraftaufwand zu bewegen. Gleichzeitig ist eine exakte, einfache Ausrichtung des Gegenstandes möglich. Gleichzeitig kann durch die Presse ein großer Druck auf die Vorrichtung ausgeübt werden, ohne diese zu beschädigen.

### Ausführungsbeispiel

Ausführungsbeispiele der Erfindung sind in den Zeichnungen dargestellt und werden im Folgenden näher erläutert. Es zeigen:
- Fig. 1: eine schematische Darstellung einer erfindungsgemäßen Vorrichtung;
- Fig. 2: die Vorrichtung nach Fig. 1 in einer zweiten Position;
- Fig. 3: die Vorrichtung nach Fig. 1 in einer weiteren Position;
- Fig. 4: eine zweite Ausführungsform der erfindungsgemäßen Vorrichtung in schematischer Darstellung;
- Fig. 5: die Vorrichtung nach Fig. 4 in einer zweiten Position;
- Fig. 6: eine dritte Ausführungsform der erfindungsgemäßen Vorrichtung in schematischer Darstellung;
- Fig. 7: die Vorrichtung nach Fig. 6 in einer zweiten Position;
- Fig. 8: eine vierte Ausführungsform der erfindungsgemäßen Vorrichtung in schematischer Darstellung; und
- Fig. 9: die Vorrichtung nach Fig. 8 in einer zweiten Position.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

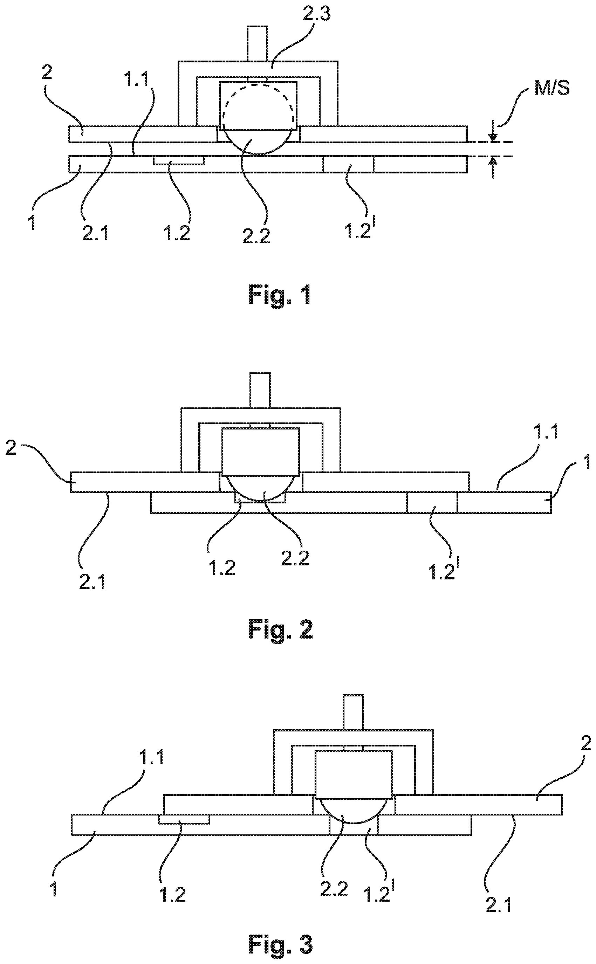

Die Figur 1 zeigt eine schematische Darstellung einer erfindungsgemäßen Vorrichtung. Die Vorrichtung wird aus einer ersten Struktur 1, sowie einer zweiten Struktur 2 gebildet. Die beiden Strukturen 1, 2 sind jeweils als Metallplatte ausgebildet und parallel zueinander angeordnet. Dabei ist die erste Struktur 1 unterhalb der zweiten Struktur 2 vorgesehen und dient als Basis der Vorrichtung. Die zweite Struktur 2 ist über der ersten Struktur 1 angeordnet. Die Vorrichtung kann jedoch auch um 180° gedreht verwendet werden, so dass die erste Struktur 1 über der zweiten Struktur 2 angeordnet ist.

Die obere Fläche der ersten Struktur 1 ist als Lauffläche 1.1 ausgebildet und der zweiten Struktur 2 zugewandt. Die untere Fläche der zweiten Struktur 2 ist als Kontaktfläche 2.1 ausgebildet und der ersten Struktur 1 zugewandt. Die Lauffläche 1.1 und die Kontaktfläche 2.1 sind dabei parallel ausgerichtet und bilden einen Spalt S.

Der Spalt S zwischen der Lauffläche 1.1 und der Kontaktfläche 2.1 wird durch eine Kugelrolle 2.2 definiert, die in der zweiten Struktur 2 angeordnet ist. Dabei ragt die Kugelrolle 2.2 um das Maß M durch die Kontaktfläche 2.1 der zweiten Struktur 2 in Richtung der Lauffläche 1.1. Durch das Maß M wird gleichzeitig der Spalt S definiert, wenn die Kugelrolle 2.2 die Lauffläche 1.1 berührt.

Um eine Bewegung zwischen der ersten Struktur 1 und der zweiten Struktur 2 zu ermöglichen, ist die Kugelrolle 2.2 drehbar in einer Aufnahme an der zweiten Struktur 2 befestigt. Die drehbar gelagerte Kugelrolle 2.2 kann so über die Lauffläche 1.1 der ersten Struktur 1 rollen und die beiden Strukturen 1, 2 sind einfach zueinander verschiebbar.

In dem dargestellten Ausführungsbeispiel verfügt die Kugelrolle 2.2 zudem über eine Regulierungsvorrichtung 2.3. Mittels der Regulierungsvorrichtung 2.3 ist eine Einstellung des Maßes M und somit des Spalts S möglich. Dafür kann die Kugelrolle 2.2 beispielsweise - hier schematisch dargestellt - mittels einer Gewindestange und einer Aufnahme in ihrer Position variiert werden.

Die erste Struktur 1 verfügt zudem über hier zwei Öffnungen 1.2, 1.2'. Die Öffnung 1.2 ist als Sackloch, die Öffnung 1.2' als Durchgangsloch ausgeführt. Dabei können die Öffnungen 1.2, 1.2' sowohl rund als auch eckig ausgeführt sein. Zur Erfüllung der erfindungsgemäßen Aufgaben müssen die Öffnungen 1.2, 1.2' lediglich so dimensioniert, dass sie die Kugelrolle 2.2 um das Maß M aufnehmen können.

In der Figur 2 ist die Vorrichtung nach Figur 1 gezeigt, wobei die erste Struktur 1 und die zweite Struktur 2 in einer anderen Position zueinander dargestellt sind. Die Strukturen 1, 2 wurden soweit zueinander verschoben, dass die Kugelrolle 2.2 und die Öffnung 1.2 übereinander liegen und die Öffnung 1.2 die Kugelrolle 2.2 aufnimmt. Die Kugelrolle 2.2 ist um das Maß M in die Öffnung 1.2 eingetaucht, wodurch sich die erste Struktur 1 und die zweite Struktur 2 aufeinander zubewegt haben.

Die Lauffläche 1.1 und die Kontaktfläche 2.1 berühren sich und liegen plan aufeinander auf. Dadurch ist eine große Kraftübertragung von der zweiten Struktur 2 auf die erste Struktur 1 möglich. Gleichzeitig wird durch die Kugelrolle 2.2 in der Öffnung 1.2 die Position zur Ausrichtung der beiden Strukturen 1, 2 zueinander definiert.

Die Positionierung der Kugelrolle 2.2 in der Öffnung 1.2 aus der Figur 2 ist identisch in der Figur 3 gezeigt. Hier ist die Kugelrolle 2.2 jedoch in der zweiten Öffnung 1.2' aufgenommen. Die Öffnung 1.2' definiert so eine weitere Position der ersten Struktur 1 und der zweiten Struktur 2 zueinander. Um die Strukturen 1, 2 von einer Position in eine weitere Position zu verschieben, muss lediglich die obere, zweite Struktur 2 verschoben werden. Durch das Verschieben gleitet die Kugelrolle 2.2 über ihre Mantelfläche aus der Öffnung 1.2' heraus. Dann kann die zweite Struktur 2 verschoben und mittels der Kugelrolle 2.2 auf der Lauffläche 1.1 zur nächsten Öffnung geschoben werden.

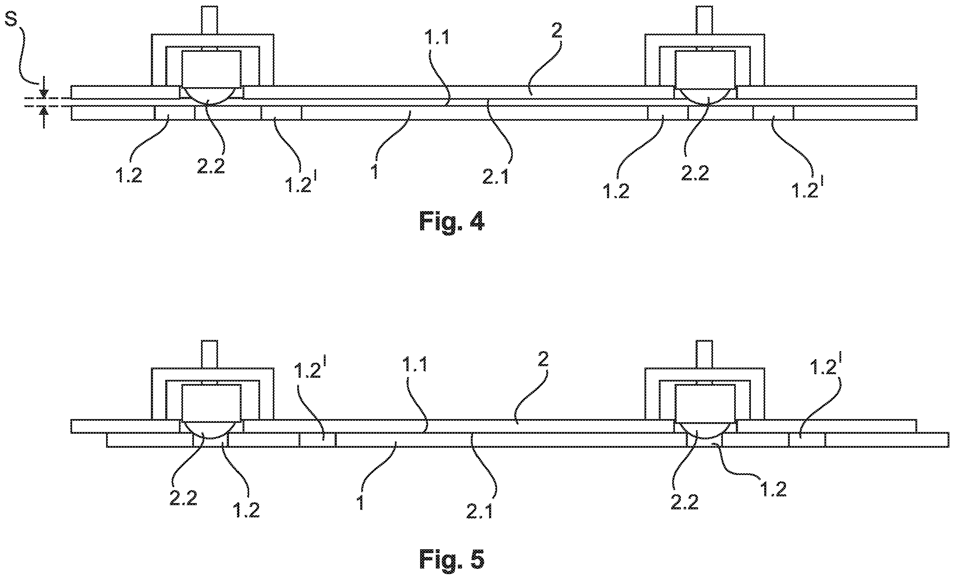

Ein weiteres Ausführungsbeispiel der erfindungsgemäßen Vorrichtung ist in den Figuren 4 und 5 gezeigt. In dem dargestellten Ausführungsbeispiel verfügt die zweite Struktur 2 über zwei Kugelrollen 2.2. Durch die Anordnung zweier Kugelrollen 2.2, die beide die Lauffläche 1.1 der ersten Struktur 1 berühren, liegen die beiden Strukturen 1, 2 sicherer zueinander. Der Spalt S ist einheitlich über die gesamte Lauffläche 1.1. Ein Kippen der Lauffläche 1.1 und der Kontaktfläche 2.1 zueinander wird so in einer ersten Achse verhindert.

Um auch ein Kippen der Flächen 1.1, 2.1 in die Tiefe der Darstellung, in einer zweiten Achse zu vermeiden, könnte in einer weiteren Ausführungsform eine dritte Kugelrolle 2.2 in einer hinteren Ebene vorgesehen sein. Dadurch würden die erste Struktur 1 und die zweite Struktur 2 sich in drei Punkten berühren und ein Kippen zueinander wäre damit ausgeschlossen. Je nach Anwendungsbereich kann dies von Vorteil sein.

Für die Verwendung von zwei Kugelrollen 2.2 wie in der Figur 4 dargestellt, müssen auch für jede Kugelrolle 2.2 entsprechend Öffnungen 1.2, 1.2' in der Lauffläche 1.1 der ersten Struktur 1 vorgesehen sein. Dadurch können die Kugelrollen 2.2 gleichzeitig in einander zugeordnete Öffnungen 1.2 eintauchen. Dies ist in Figur 5 beispielhaft dargestellt. Die Kugelrollen 2.2 tauchen gleichzeitig in die Öffnungen 1.2 ein, wodurch die Lauffläche 1.1 und die Kontaktfläche 2.1 einander plan berühren. So ist eine flächige Kraftübertragung von der oberen, zweiten Struktur 2 auf die untere, erste Struktur 1 möglich.

Ein weiteres Ausführungsbeispiel sieht vor die Strukturen 1, 2 über Führungen so miteinander zu verbinden, dass lediglich eine Bewegung der Strukturen 1, 2 so zueinander möglich ist, dass die Kugelrollen 2.2 von Öffnung 1.2 zu Öffnung 1.2' bewegt werden können. So ist ein Suchen der entsprechenden Öffnungen 1.2, 1.2' für die Kugelrollen 2.2 nicht nötig.

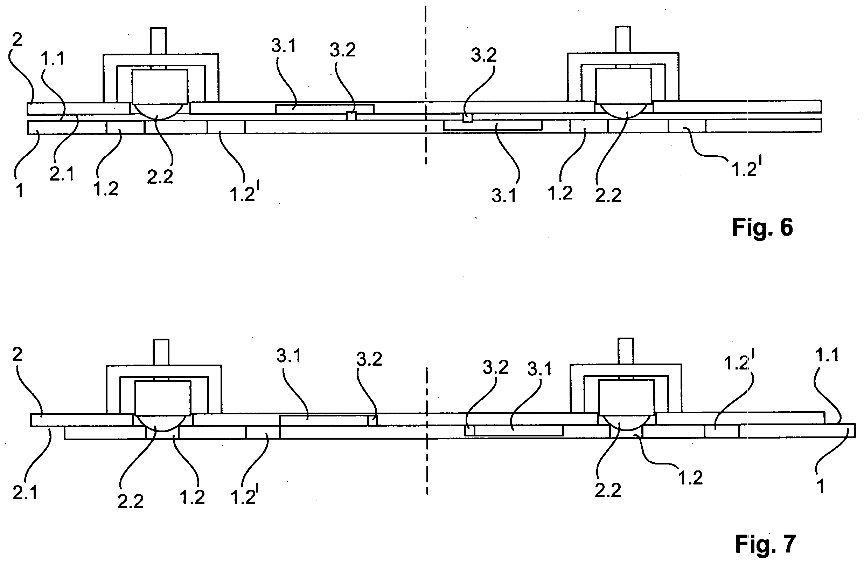

Als Führung dient an einer der Strukturen 1, 2 eine Führungsnut 3.1 in welche ein Führungsstift 3.2 an der anderen Struktur 2, 1 eingreift. Die Figuren 6 und 7 zeigen zwei Ausführungsbeispiele dafür. In der jeweils linken Hälfte der Darstellung ist die Führungsnut 3.1 in die Kontaktfläche 2.1 der zweiten Struktur 2 eingebracht und der Führungsstift 3.2 in die Lauffläche 1.1 der ersten Struktur 1.

Entsprechend umgedreht ist in der rechten Hälfte der Darstellungen die Führungsnut 3.1 in der ersten Struktur 1 vorgesehen und der Führungsstift 3.2 in der zweiten Struktur 2. Führungsnut 3.1 und Führungsstift 3.2 sind so zueinander angeordnet, dass lediglich eine Bewegung der Kugelrolle 2.2 zwischen den Öffnungen 1.2 und den Öffnungen 1.2' möglich ist. Dadurch können die erste Struktur 1 und die zweite Struktur 2 nur in der dargestellten Ansicht von rechts nach links und umgekehrt verschoben werden. Eine Bewegung der Strukturen 1, 2 gegeneinander in die Tiefe der Darstellung ist nicht möglich.

Die Führungsnut 3.1 und der Führungsstift 3.2 sind dabei so ausgebildet, dass sie sowohl ineinandergreifen, wenn die Kugelrollen 2.2 auf der Lauffläche 1.1 rollen, als auch wenn die Kugelrollen 2.2 in den Öffnungen 1.2, 1.2' aufgenommen sind. Die Figur 7 zeigt entsprechend die aneinander liegenden Strukturen 1, 2. Die Kugelrollen 2.2 sind in den Öffnungen 1.2 aufgenommen und die Führungsstifte 3.2 vollständig in die Führungsnuten 3.1 eingetaucht.

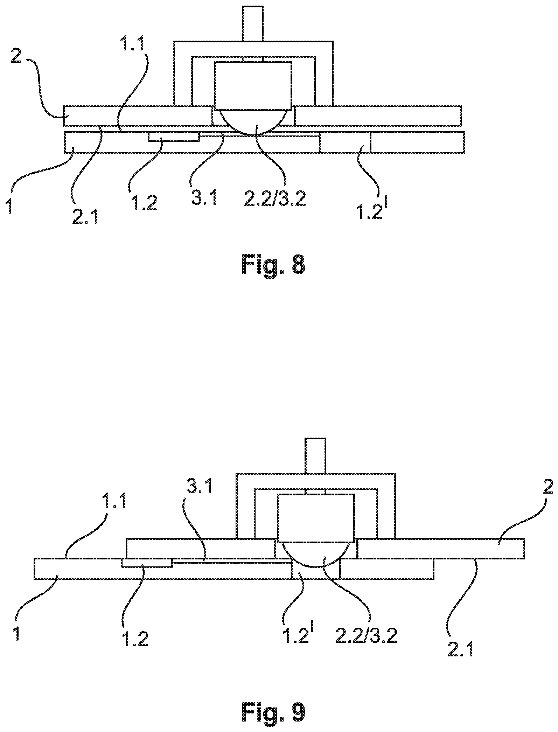

Ein weiteres Ausführungsbeispiel der erfindungsgemäßen Vorrichtung ist in den Figuren 8 und 9 gezeigt. Dieses Ausführungsbeispiel verfügt ebenfalls über eine Führung, wie in den Figuren 6 und 7. In dieser speziellen Ausführung wird der Führungsstift 3.2 jedoch durch die Kugelrolle 2.2 gebildet.

Die Führungsnut 3.1 verbindet direkt eine Öffnung 1.2 mit einer zweiten Öffnung 1.2'. Die Führung der zweite Struktur 2 zur ersten Struktur 1 erfolgt durch die Kugelrolle 2.2, welche sich in der Führungsnut 3.1 zwischen den Öffnungen 1.2, 1.2' bewegen kann.

Vorteilhaft bei diesem Ausführungsbeispiel ist, dass die obere, zweite Struktur 2 etwas weniger angehoben werden muss, um verschoben zu werden. Die Kugelrolle 2.2 muss lediglich in die Führungsnut 3.1 gehoben werden, nicht jedoch bis auf die Lauffläche 1.1.

### Bezugszeichenliste

- 1: erste Struktur
- 1.1: Lauffläche
- 1.2: Öffnung
- 2: zweite Struktur
- 2.1: Kontaktfläche
- 2.2: Kugelrolle
- 2.3: Regulierungsvorrichtung
- 3.1: Führungsnut
- 3.2: Führungsstift
- M: Maß
- S: Spalt

## Patentansprüche

1. Vorrichtung zum Transport von Gegenständen,
bestehend aus einer ersten, flächig ausgebildeten Struktur (1) und einer zweiten, flächig ausgebildeten Struktur (2),
wobei die erste Struktur (1) eine, der zweiten Struktur (2) zugewandte, ebene Lauffläche (1.1) ausbildet,
wobei die zweite Struktur (2) eine, der ersten Struktur (1) zugewandte, ebene Kontaktfläche (2.1) ausbildet,
wobei die Lauffläche (1.1) und die Kontaktfläche (2.1) parallel zueinander angeordnet sind,
wobei die zweite Struktur (2) über zumindest eine Kugelrolle (2.2) verfügt, die mit der Lauffläche (1.1) der ersten Struktur (1) in Kontakt steht, und
wobei die erste Struktur (1) und die zweite Struktur (2) parallel zueinander verschiebbar sind
**dadurch gekennzeichnet, dass**
die zumindest eine Kugelrolle (2.2) drehbar in der zweiten Struktur (2) aufgenommen ist und zumindest bereichsweise durch die Kontaktfläche (2.1) um ein Maß (M) in Richtung der Lauffläche (1.1) ragt, und so ein Spalt (S) zwischen der Lauffläche (1.1) und der Kontaktfläche (2.1) definiert und dass
in der Lauffläche (1.1) der ersten Struktur (1) zumindest eine Öffnung (1.2) vorgesehen ist,
wobei die zumindest eine Öffnung (1.2) so ausgebildet ist, dass die zumindest eine Kugelrolle (2.2) um zumindest das Maß (M) in die zumindest eine Öffnung (1.2) eintauchen kann.

2. Vorrichtung nach vorstehendem Anspruch,
**dadurch gekennzeichnet, dass**
die zumindest eine Kugelrolle (2.2) über eine Regulierungsvorrichtung (2.3) mit der zweiten Struktur (2) verbunden ist, wodurch das Maß (M) und der Spalt (S) einstellbar ist.

3. Vorrichtung nach einem der Ansprüche 1 oder 2,
**dadurch gekennzeichnet, dass**
das Maß (M) dem 0,3-fachen des Radius der zumindest einen Kugelrolle (2.2) oder weniger entspricht.

4. Vorrichtung nach einem der vorstehenden Ansprüche,
**dadurch gekennzeichnet, dass**
die zweite Struktur (2) über zumindest zwei Kugelrollen (2.2) verfügt und jeder Kugelrolle (2.2) zumindest eine Öffnung (1.2) in der Lauffläche (1.1) der ersten Struktur (1) zugeordnet ist, in welche die Kugelrollen (2.2) gleichzeitig eintauchen können.

5. Vorrichtung nach vorstehendem Anspruch,
**dadurch gekennzeichnet, dass**
jeder der zumindest zwei Kugelrollen (2.2) eine Vielzahl von Öffnungen (1.2) in der Lauffläche (1.1) zugeordnet sind,
wobei die Öffnungen (1.2) der jeweiligen Kugelrollen (2.2) im selben Muster angeordnet sind.

6. Vorrichtung nach einem der vorstehenden Ansprüche,
**dadurch gekennzeichnet, dass**
die Strukturen (1, 2) mittels einer Führung so zueinander ausgerichtet sind, dass die Strukturen (1, 2) nur in, durch die Führung definierten Bahnen zueinander verschiebbar sind.

7. Vorrichtung nach vorstehendem Anspruch,
**dadurch gekennzeichnet, dass**
die Führung aus einer Führungsnut (3.1) und einem Führungsstift (3.2) besteht.

8. Vorrichtung nach vorstehendem Anspruch,
**dadurch gekennzeichnet, dass**
die Führungsnut (3.1) an einer der Strukturen (1, 2) vorgesehen ist und der Führungsstift (3.2) an der anderen der Strukturen (2, 1) vorgesehen ist,
wobei der Führungsstift (3.2) in die Führungsnut (3.1) eingreift.

9. Vorrichtung nach vorstehendem Anspruch,
**dadurch gekennzeichnet, dass**
der Führungsstift (3.2) in der Lauffläche (1.1) der ersten Struktur (1) vorgesehen ist und die Führungsnut (3.1) in der Kontaktfläche (2.1) der zweiten Struktur (2) vorgesehen ist.

10. Vorrichtung nach Anspruch 8,
**dadurch gekennzeichnet, dass**
die Führungsnut (3.1) in der Lauffläche (1.1) der ersten Struktur (1) vorgesehen ist und der Führungsstift (3.2) in der Kontaktfläche (2.1) der zweiten Struktur (2) vorgesehen ist.

11. Vorrichtung nach vorstehendem Anspruch,
**dadurch gekennzeichnet, dass**
der Führungsstift (3.2) durch die zumindest eine Kugelrolle (2.2) gebildet wird.

12. Vorrichtung nach einem der vorstehenden Ansprüche,
**dadurch gekennzeichnet, dass**
auf der Seite der zweiten Struktur (2), die der ersten Struktur (1) abgewandten ist, zumindest ein Mittel zur Aufnahme von Gegenständen vorgesehen ist.

13. Vorrichtung nach einem der Ansprüche 1 bis 11,
**dadurch gekennzeichnet, dass**
auf der Seite der ersten Struktur (1), die der zweiten Struktur (2) abgewandten ist, zumindest ein Mittel zur Aufnahme von Gegenständen vorgesehen ist.

14. Vorrichtung nach einem der vorstehenden Ansprüche,
**dadurch gekennzeichnet, dass**
es sich bei den Gegenständen um Leiterplatten handelt.

15. Vorrichtung nach einem der vorstehenden Ansprüche,
**dadurch gekennzeichnet, dass**
die erste Struktur (1) und die zweite Struktur (2) jeweils aus einer Metallplatte gebildet sind.

## Claims

1. Apparatus for transporting articles,
comprising a first, sheet-like structure (1) and a second, sheet-like structure (2),
wherein the first structure (1) forms a planar running surface (1.1), which is directed towards the second structure (2),
wherein the second structure (2) forms a planar contact surface (2.1), which is directed towards the first structure (1),
wherein the running surface (1.1) and the contact surface (2.1) are arranged parallel to one another,
wherein the second structure (2) has at least one ball roller (2.2), which is in contact with the running surface (1.1) of the first structure (1), and
wherein the first structure (1) and second structure (2) can be displaced parallel to one another, **characterized in that**
the at least one ball roller (2.2) is accommodated in a rotatable manner in the second structure (2) and at least partially projects through the contact surface (2.1), in the direction of the running surface (1.1), by a distance (M), and thus defines a gap (S) between the running surface (1.1) and the contact surface (2.1), and **in that** at least one opening (1.2) is provided in the running surface (1.1) of the first structure (1),
wherein the at least one opening (1.2) is designed such that the at least one ball roller (2.2) can penetrate into the at least one opening (1.2) by at least the distance (M).

2. Apparatus according to the preceding claim, **characterized in that**
the at least one ball roller (2.2) is connected to the second structure (2) via a regulating device (2.3), as a result of which it is possible to adjust the distance (M) and the gap (S).

3. Apparatus according to either of Claim 1 and 2, **characterized in that**
the distance (M) corresponds to 0.3 times the radius of the at least one ball roller (2.2) or less.

4. Apparatus according to one of the preceding claims, **characterized in that**
the second structure (2) has at least two ball rollers (2.2) and each ball roller (2.2) is assigned at least one opening (1.2) in the running surface (1.1) of the first structure (1), it being possible for the ball rollers (2.2) to penetrate simultaneously into said openings.

5. Apparatus according to the preceding claim, **characterized in that**
each of the at least two ball rollers (2.2) is assigned a multiplicity of openings (1.2) in the running surface (1.1),
wherein the openings (1.2) for the respective ball rollers (2.2) are arranged in the same pattern.

6. Apparatus according to one of the preceding claims, **characterized in that**
the structures (1, 2) are oriented in relation to one another by means of a guide such that the structures (1, 2) can be displaced in relation to one another only in tracks defined by the guide.

7. Apparatus according to the preceding claim, **characterized in that**
the guide comprises a guide groove (3.1) and a guide pin (3.2) .

8. Apparatus according to the preceding claim, **characterized in that**
the guide groove (3.1) is provided on one of the structures (1, 2) and the guide pin (3.2) is provided, on the other one of the structures (2, 1),
wherein the guide pin (3.2) engages in the guide groove (3.1) .

9. Apparatus according to the preceding claim, **characterized in that**
the guide pin (3.2) is provided in the running surface (1.1) of the first structure (1) and the guide groove (3.1) is provided in the contact surface (2.1) of the second structure (2).

10. Apparatus according to Claim 8, **characterized in that**
the guide groove (3.1) is provided in the running surface (1.1) of the first structure (1) and the guide pin (3.2) is provided in the contact surface (2.1) of the second structure (2).

11. Apparatus according to the preceding claim, **characterized in that**
the guide pin (3.2) is formed by the at least one ball roller (2.2).

12. Apparatus according to one of the preceding claims, **characterized in that**
at least one means for accommodating articles is provided on that side of the second structure (2) which is directed away from the first structure (1).

13. Apparatus according to one of Claims 1 to 11, **characterized in that**
at least one means for accommodating articles is provided on that side of the first structure (1) which is directed away from the second structure (2).

14. Apparatus according to one of the preceding claims, **characterized in that**
the articles are printed circuit boards.

15. Apparatus according to one of the preceding claims, **characterized in that**
the first structure (1) and the second structure (2) are each formed from a metal plate.

## Revendications

1. Dispositif de transport d'objets comprenant une première structure (1) sensiblement bidimensionnelle et une deuxième structure (2) sensiblement bidimensionnelle, la première structure (1) formant une bande de roulement plane (1.1) faisant face à la deuxième structure (2), la deuxième structure (2) formeant une surface de contact plane (2.1) faisant face à la première structure (1), la surface de roulement (1.1) et la surface de contact (2.1) étant disposées parallèlement l'une à l'autre, la deuxième structure (2) comportant au moins un galet à billes (2.2) en contact avec la bande de roulement (1.1) de la première structure (1), et la première structure (1) et la deuxième structure (2) pouvant coulisser parallèlement l'une à l'autre,
**caractérisé en ce que**
l'au moins un galet à billes (2.2) est reçu de manière rotative dans la deuxième structure (2) et fait saillie au moins partiellement à travers la surface de contact (2.1) sur une étendue (M) en direction de la bande de roulement (1.1) et définit ainsi un espace (S) entre la bande de roulement (1.1) et la surface de contact (2.1) de sorte qu'au moins une ouverture (1.2) est ménagée dans la bande de roulement (1.1) de la première structure (1),
l'au moins une ouverture (1.2) étant formée de sorte que l'au moins un galet à billes (2.2) puisse pénétrer dans l'au moins une ouverture (1.2) sur au moins l'étendue (M).

2. Dispositif selon la revendication précédente,
**caractérisé en ce que**
l'au moins un galet à billes (2.2) est relié à la deuxième structure (2) par le biais d'un dispositif de réglage (2.3) permettant de régler l'étendue (M) et l'espace (S).

3. Dispositif selon l'une des revendications 1 et 2,
**caractérisé en ce que**
l'étendue (M) correspond à 0,3 fois le rayon d'au moins un galet à billes (2.2).

4. Dispositif selon l'une des revendications précédentes,
**caractérisé en ce que**
la deuxième structure (2) comporte au moins deux galets à billes (2.2) et au moins une ouverture (1.2) ménagée dans la surface de roulement (1.1) de la première structure (1) est associée à chaque galet à billes (2.2), ouverture dans laquelle les galets à billes (2.2) peuvent pénétrer simultanément.

5. Dispositif selon la revendication précédente,
**caractérisé en ce que**
une pluralité d'ouvertures (1.2) ménagées dans la surface de roulement (1.1) est associée à chacun des au moins deux galets à billes (2.2), les ouvertures (1.2) des galets à billes respectifs (2.2) étant disposées suivant le même motif.

6. Dispositif selon l'une des revendications précédentes,
**caractérisé en ce que**
les structures (1, 2) sont orientées les unes par rapport aux autres au moyen d'un guide de sorte que les structures (1, 2) ne puissent coulisser les unes par rapport aux autres que suivant des trajectoires définies par le guide.

7. Dispositif selon la revendication précédente,
**caractérisé en ce que**
le guide comprend une rainure de guidage (3.1) et une broche de guidage (3.2).

8. Dispositif selon la revendication précédente,
**caractérisé en ce que**
la rainure de guidage (3.1) est prévue au niveau de l'une des structures (1, 2) et la broche de guidage (3.2) est prévue au niveau de l'autre des structures (2, 1), la broche de guidage (3.2) s'engageant dans la rainure de guidage (3.1).

9. Dispositif selon la revendication précédente,
**caractérisé en ce que**
la broche de guidage (3.2) est prévue dans la surface de roulement (1.1) de la première structure (1) et la rainure de guidage (3.1) est prévue dans la surface de contact (2.1) de la deuxième structure (2).

10. Dispositif selon la revendication 8,
**caractérisé en ce que**
la.rainure de guidage (3.1) est prévue dans la surface de roulement (1.1) de la première structure (1) et la broche de guidage (3.2) est prévue dans la surface de contact (2.1) de la deuxième structure (2).

11. Dispositif selon la revendication précédente,
**caractérisé en ce que**
la broche de guidage (3.2) est formée par l'au moins un galet à billes (2.2).

12. Dispositif selon l'une des revendications précédentes,
**caractérisé en ce que**
au moins un moyen de réception d'objets est prévu du côté de la deuxième structure (2) qui est opposé à la première structure (1).

13. Dispositif selon l'une des revendications 1 à 11,
**caractérisé en ce que**
au moins un moyen de réception d'objets est prévu du côté de la première structure (1) qui est opposé à la deuxième structure (2).

14. Dispositif selon l'une des revendications précédentes,
**caractérisé en ce que**
les objets sont des cartes de circuit imprimé.

15. Dispositif selon l'une des revendications précédentes,
**caractérisé en ce que**
la première structure (1) et la deuxième structure (2) sont chacune formées d'une plaque métallique.
